# EUROPÄISCHE PATENTSCHRIFT

(11) **EP 4 605 268 B1**
(45) Veröffentlichungstag und Bekanntmachung des Hinweises auf die Patenterteilung: **01.07.2026**
(21) Anmeldenummer: 23798887.8
(22) Anmeldetag: 20.10.2023
(51) Int. Cl.: B60Q 1/068

(54) **EINSTELLVORRICHTUNG**
ADJUSTING DEVICE
DISPOSITIF DE RÉGLAGE

(30) Priorität: 21.10.2022 DE 102022127959
(43) Veröffentlichungstag der Anmeldung: 27.08.2025
(73) Patentinhaber: EJOT SE & Co. KG, 57319 Bad Berleburg (DE)
(72) Erfinder: SCHROEDER, Jochen, 57319 Bad Berleburg (DE)
(74) Vertreter: patcare Patentanwälte Partnerschaft mbB
(86) Internationale Anmeldenummer: PCT/EP2023/079280
(87) Internationale Veröffentlichungsnummer: WO 2024/084043

(56) Entgegenhaltungen:
- EP-A1- 3 650 270
- WO-A1-2021/069744
- DE-A1- 102010 061 428
- DE-A1- 102012 212 930
- US-A1- 2015 158 415

## Beschreibung

Die Erfindung betrifft eine Einstellvorrichtung für Scheinwerfer gemäß der im Oberbegriff des Anspruchs 1 angegebenen Art.

Bekanntermaßen wird eine Einstellvorrichtung für Scheinwerfer mit einer Stellschraube, die in einem Gewindeeingriff mit einem Lichtmodul des Scheinwerfers steht, zum Verschwenken desselben um eine horizontale oder vertikale Achse verwendet.

Eine derartige Einstellvorrichtung ist unter anderem aus der WO 2021/069744 A1 bekannt. Die Einstellvorrichtung umfasst dabei eine Rasthülse mit einer Abtriebsstruktur, in die ein Ende der Stellschraube eingebracht ist, sowie ein Antriebsrad, das von dem der Stellschraube abgewandten Ende auf die Rasthülse aufgebracht wird und mit dieser so verrastet, dass sie entgegen der Aufsteckrichtung festgehalten wird. Die Raststruktur der Rasthülse ist dabei an dem der Stellschraube abgewandten Ende der Rasthülse ausgebildet. Die Raststruktur bildet mit dem Antriebsrad eine formschlüssige Verbindung. Die Rasthülse umgreift in Axialrichtung Haltestrukturen der Stellschraube, wobei die Haltestrukturen radial formschlüssig durch das aufgesteckte Antriebsrad festgehalten werden und damit ein Lösen der Haltestrukturen verhindert. Das Antriebsrad bildet damit eine Sicherung für die Haltestrukturen.

Nachteilig an der bekannten Einstellvorrichtung ist, dass bei Einbringen eines Drehmoments auf die Antriebsstruktur des Antriebsrads eine Kraft entgegen der Aufsteckrichtung des Antriebsrads auf die Rasthülse wirkt, also das Bauteil, das ein Lösen der Haltestrukturen verhindern soll, einer Kraft ausgesetzt ist, die in Richtung einer Entsicherung wirkt. Um einer Entsicherung im Betrieb entgegenzuwirken, muss dies bei der Auslegung berücksichtigt werden und kann zu erhöhten Montagekräften durch Bereitstellen einer entsprechend dimensionierten Raststruktur führen.

Weiterhin werden zur Übertragung eines externen Drehmoments vom Antriebsrad auf die Stellschraube zwei Übertragungsstrukturen benötigt.

Der Erfindung liegt daher die Aufgabe zugrunde, eine Einstellvorrichtung gemäß der im Oberbegriff des Anspruchs 1 angegebenen Art derart weiterzubilden, dass unter Vermeidung der genannten Nachteile eine einfache Montage ermöglicht wird.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Art und Weise umfasst eine Einstellvorrichtung für Scheinwerfer eine Stellschraubenanordnung, umfassend eine Stellschraube mit einer Schraubenmittelachse. Die Stellschraube weist ein vorderes und ein hinteres Ende auf. Die Schraubenmittelachse verläuft naturgemäß längs durch die Stellschraube.

Die Stellschraubenanordnung umfasst ferner ein Antriebselement. Das Antriebselement weist einen einstückig ausgebildeten Grundkörper auf. Der Grundkörper weist eine Antriebsstruktur und eine Abtriebsstruktur zur Drehmomentübertragung auf. Die Antriebsstruktur und die Abtriebsstruktur besitzen eine gemeinsame Drehachse, um die die Drehung der Antriebsstruktur und Abtriebsstruktur erfolgt. Die Antriebsstruktur liegt radial außerhalb der Abtriebsstruktur, also weiter von der Drehachse entfernt. Dadurch kann eine Drehbewegung von radial außen nach radial innen auf die Stellschraube übertragen werden.

Das Antriebselement umgreift dazu die Stellschraube derart, dass die Abtriebsstruktur mit einer Schraubenantriebsstruktur der Stellschraube in Drehrichtung formschlüssig gekoppelt ist, wobei die Drehachse und die Schraubenmittelachse koaxial zueinander liegen. Dadurch kann ein Drehmoment von der Abtriebsstruktur auf die Stellschraube übertragen werden.

Die Stellschraube weist eine Stellschraubenaxialhaltestruktur und das Antriebselement eine Antriebselementaxialhaltestruktur auf. Die Stellschraubenaxialhaltestruktur und die Antriebselementaxialhaltestruktur stehen zumindest in einer Sicherungsstellung der Schraubenanordnung derart in Eingriff, dass die Antriebselementaxialhaltestruktur und die Stellschraubenaxialhaltestruktur einer axialen Relativbewegung zwischen der Stellschraube und dem Antriebselement wenigstens in einer Bewegungsrichtung entgegenwirken.

Ferner umfasst die Stellschraubenanordnung ein Sicherungselement. Das Sicherungselement ist zumindest von einer Montageposition in eine Sicherungsposition relativ zum Antriebselement axial verschiebbar ausgebildet. Wenn sich das Sicherungselement in der Sicherungsposition befindet, befindet sich die erfindungsgemäße Stellschraubenanordnung in der Sicherungsstellung.

Das Sicherungselement weist, insbesondere an einem axialen Ende, einen Sicherungsbereich auf. In der Sicherungsposition umgreift das Sicherungselement mit seinem Sicherungsbereich die wenigstens eine Antriebselementaxialhaltestruktur wenigstens bereichsweise in radialer Richtung derart formschlüssig, dass die von der Stellschraubenaxialhaltestruktur und der Antriebselementaxialhaltestruktur vermittelte Rückhaltekraft gegenüber der in der Montageposition vermittelten Rückhaltekraft wenigstens in einer Axialrichtung erhöht ist. So kann sich beispielsweise die Rückhaltekraft in der Montageposition durch einen federnd vorgespannten Rasteingriff zwischen Stellschraubenaxialhaltestruktur und der Antriebselementaxialhaltestruktur ergeben und die Rückhaltekraft in der Sicherungsposition durch einen reinen Formschluss. Die Rückhaltekraft entspricht dabei der zur Zerstörung des Formschlusses notwendigen Kraft. Die notwendige Kraft zur Überwindung der Vorspannung ist dabei geringer als die Kraft, die zur Zerstörung des Formschlusses notwendig ist.

Erfindungsgemäß ist das Sicherungselement derart relativ zum Antriebselement angeordnet, dass der Sicherungsbereich radial zwischen der Antriebsstruktur und der Abtriebsstruktur liegt.

Durch die einstückige Ausbildung der Antriebs- und Abtriebsstruktur wird erreicht, dass ein durch die Antriebsstruktur extern eingebrachtes Drehmoment direkt vom Antriebselement auf die Stellschraube übertragen werden kann.

So wird, durch die erfindungsgemäße Anordnung, das Sicherungselement bei der Drehbewegungsübertragung von der Antriebsstruktur zur Abtriebsstruktur nicht mit einer Axialkraft beaufschlagt, die zu einer Relativbewegung des Sicherungselements gegenüber dem Antriebselement führt, nämlich einer Axialbewegung aus der Sicherungsposition heraus. Insoweit muss bei der Auslegung der Stellschraubenanordnung diese Axialkraft nicht mehr berücksichtigt werden, wodurch niedrigere Montagekräfte erreicht werden können.

Bevorzugt ist das Sicherungselement gegenüber dem Antriebselement, insbesondere gegenüber dem Grundkörper des Antriebskörpers, linear geführt. Hierdurch wird eine Positionstreue in Umfangsrichtung zwischen der Montageposition und der Sicherungsposition erreicht.

Ein einfaches Überführen des Sicherungselements zwischen der Montageposition und der Sicherungsposition wird ebenfalls ermöglicht.

Um ein einfaches begrenztes Verfahren zwischen Montageposition und Sicherungsposition zu gewährleisten, ist, zur Begrenzung des Axial-Verfahrwegs des Sicherungselements zwischen Montageposition und Sicherungsposition, ein formschlüssiger Anschlag zwischen Antriebselement und Sicherungselement ausgebildet.

Durch eine Begrenzung des Verfahrwegs in Richtung der Sicherungsposition kann durch einen Sicherungsanschlag die Sicherungsposition zuverlässig erreicht werden.

Durch Begrenzung des Verfahrwegs in Richtung der Montageposition durch einen Montageanschlag kann das Sicherungselement nicht über den Montageanschlag hinausgefahren werden.

Bevorzugt sind das Antriebselement und das Sicherungselement derart aufeinander abgestimmt, dass sowohl ein Sicherungsanschlag als auch ein Montageanschlag vorgesehen ist. Dadurch wird das Sicherungselement verliersicher am Antriebselement gehalten.

Gemäß einer weiteren vorteilhaften Ausbildungsform der Erfindung weist der Grundkörper wenigstens eine Ausnehmung auf, durch die der Grundkörper von dem Sicherungselement mit seinem Durchgriffsbereich wenigstens bereichsweise axial durchsetzt wird.

Die wenigstens eine Ausnehmung des Antriebselements und der Durchgriffsbereich des Sicherungselements sind insbesondere derart aufeinander abgestimmt, dass das Sicherungselement in der wenigstens einen Ausnehmung linear geführt ist.

So kann das Sicherungselement in der Sicherungsposition an den Anschlagsflächen an der einen Seite des Antriebselements anliegen. Das Sicherungselement kann jenseits des Durchgriffbereichs, in seinem Endbereich, auf der anderen Seite des Antriebselements, einen Anschlagsbereich aufweisen, der mit dem Grundkörper des Antriebselements einen formschlüssigen Anschlag in Verfahrrichtung in Richtung der Montageposition bildet.

Dadurch sind das Sicherungselement und das Antriebselement verliersicher miteinander verbunden und dennoch axial verschieblich zueinander gelagert.

Vorzugsweise ist die Antriebselementaxialhaltestruktur einstückig mit dem Grundkörper ausgebildet. Auch kann die Stellschraubenaxialhaltestruktur einstückig mit der Stellschraube ausgebildet sein. Hierdurch wird die Anzahl der erforderlichen Komponenten gering gehalten.

Die Antriebselementaxialhaltestruktur hintergreift die Stellschraubenaxialhaltestruktur formschlüssig. Die Antriebselementaxialhaltestruktur kann in radialer Richtung federnd ausgebildet sein, wodurch das Antriebselement in einer Axialbewegung in einer Einbringrichtung auf die Stellschraube aufgebracht werden kann. Dabei überrastet die Antriebselementaxialhaltestruktur mit der Stellschraubenaxialhaltestruktur bei einer Bewegung in der Einbringrichtung, wonach ein Bewegen der Antriebselementaxialhaltestruktur und der Stellschraubenaxialhaltestruktur entgegen der Einbringrichtung gehemmt ist.

Die in radialer Richtung federnde Ausgestaltung wird vorzugsweise durch Gestaltung der Antriebselementhaltestruktur umfassend nachgiebige Haltefinger mit Rastnasen zum Hintergreifen der Stellschraubenaxialhaltestruktur erreicht.

Gemäß einer weiteren vorteilhaften Ausbildungsform der Erfindung umgreift das Antriebselement die Stellschraube an ihrem Endbereich und treibt die Stellschraube ähnlich einer herkömmlichen Schraube an ihrem Endbereich an.

Indem das Antriebselement die Stellschraube an ihrem Endbereich umgreift und antreibt, kann die Stellschraube auf einfache Weise hergestellt werden und zudem kann zwischen dem Antriebselement und der Stellschraube in einfacher Weise ein Anschlag in Axialrichtung ausgebildet werden. Der Anschlag begrenzt die axiale Relativbewegung zwischen dem Antriebselement und der Stellschraube in Einbringrichtung, so dass durch die Axialhaltestrukturen die Stellschraube nur noch entgegen der Einbringrichtung festgehalten werden muss.

Vorzugsweise sind die Axialhaltestrukturen in Axialrichtung zwischen den Antriebsstrukturen und dem Schraubengewinde der Stellschraube angeordnet. Dadurch werden zur Montage die Antriebsstrukturen durch die Axialhaltestrukturen hindurchgeschoben, so dass die Antriebsstrukturen im Außendurchmesser kleiner als die Axialhaltestrukturen sein können, wodurch wiederum die Axialhaltestrukturen in ihrem Außendurchmesser unabhängig von der Größe der Antriebsstrukturen gestaltet werden können.

Bevorzugt weist das Sicherungselement einen hohlzylindrischen Sicherungsbereich auf. In der Sicherungsstellung umgreift der hohlzylindrische Sicherungsbereich die Antriebselementaxialhaltestruktur komplett umlaufend. Durch das komplett umlaufende Umgreifen der Antriebselementaxialhaltestruktur liegt das Sicherungselement im Sicherungsbereich gleichmäßig an der Antriebselementaxialhaltestruktur an und weist eine große Stabilität auf.

Gemäß einer weiteren vorteilhaften Ausbildungsform der Erfindung weist das Sicherungselement an seinem dem Schraubengewinde der Stellschraube abgewandten Ende eine Abdeckkappe auf. Der Außendurchmesser der Abdeckkappe ist größer als der Außendurchmesser des Antriebselements. Hierdurch wird ermöglicht, dass die Stellschraubenanordnung mit dem Stellschraubenende voraus in eine Einsetzöffnung eines Gehäuses der Einstellvorrichtung eingesteckt werden kann, wobei die Einsetzöffnung dann von der Abdeckkappe abgedeckt werden kann. Dadurch wird der Schutz vor Schmutzeintrag verbessert.

Gemäß einer bevorzugten Ausgestaltung sind das Antriebselement und das Sicherungselement durch ein Zwei-Komponenten-Spritzgiess-Verfahren hergestellt. Dies erlaubt eine einfache und schnelle Produktion.

Vorzugsweise ist das Sicherungselement in der Sicherungsstellung mit dem Antriebselement verrastet ausgebildet. Durch das Verrasten von Sicherungselement und Antriebselement in der Sicherungsstellung wird einem axialen Verschieben des Antriebselements relativ zum Sicherungselement und vice versa entgegengewirkt.

Bevorzugt weist die Einstellvorrichtung ein zur Stellschraube orthogonal orientiertes Kegelrad auf, das in die Antriebsstruktur eines als eine Kegelradverzahnung aufweisendes Antriebsrad ausgebildeten Antriebselements eingreift. Hierdurch kann ein Drehmoment durch das Kegelrad aus einer Schraubrichtung quer zur Schraubenmittelachse durch die Antriebsstruktur auf das Antriebselement übertragen werden.

Gemäß einer weiteren vorteilhaften Ausführungsform der Erfindung ist das Antriebselement aus einem ersten thermoplastischen Kunststoff und das Sicherungselement aus einem zweiten thermoplastischen Kunststoff hergestellt. Der erste thermoplastische Kunststoff weist dabei eine höhere Schmelztemperatur auf als der zweite thermoplastische Kunststoff. Dies hat den Vorteil, dass beide Elemente zusammen im Zwei-Komponenten-Spritzgiess-Verfahren hergestellt werden können und hierbei beweglich zueinander bleiben.

Um einen Schutz vor äußeren Einflüssen zu gewährleisten, kann das Gehäuse durch das Sicherungselement bereichsweise abgedeckt werden, wenn die Antriebsbaugruppe durch die Einsetzöffnung eingebracht ist.

Das Gehäuse kann bevorzugt aus einem Verfahrbereich und einem Antriebsbereich gebildet sein. Die beiden Bereiche können durch eine Zwischenwand mit einer insbesondere kreisrunden Zwischenwandöffnung getrennt sein. An einer Oberseite im Antriebsbereich des Gehäuses ist bevorzugt eine Öffnung vorgesehen, in die ein Kegelrad eingebracht sein kann. Auf einer Rückseite im Antriebsbereich des Gehäuses ist eine Einsetzöffnung vorgesehen. Die Einsetzöffnung kann dabei einen kreisrunden Querschnitt aufweisen. Die Einsetzöffnung und das umliegende Gehäuse sind dabei so ausgebildet, dass in der Sicherungsposition des Sicherungselements die Abdeckkappe des Sicherungselements die Einsetzöffnung abdeckt, insbesondere abdichtet.

Im Bereich der Einsetzöffnung kann ein Absatz ausgebildet sein, der die Abdeckkappe umfänglich umschließt.

Ein vorderer Bereich des Gehäuses bildet einen Verfahrbereich, in dem die Stellschraube mit ihrem Schraubengewinde eingebracht ist. Die Stellschraube ist dabei so eingebracht, dass sie sich durch die Zwischenwandöffnung erstreckt, sodass die Stellschraubenaxialhaltestrukturen und die Antriebsstrukturen im Antriebsbereich angeordnet sind. Im Verfahrbereich an der Zwischenwand anliegend kann die Stellschraube von einer hohlzylindrischen Gummidichtung umgriffen werden.

Die Stellschraube ist mit ihrem vorderen Ende mit einem Einstellmodul verbunden, wobei die Verbindung als Gewindeeingriff ausgebildet ist. Das Einstellmodul ist durch eine, insbesondere schienenförmige Ausbildung des Gehäuses im Bereich der Unterseite des Gehäuses, in Axialrichtung linear verschiebbar gelagert. Der Gewindeeingriff ist an dem den Antriebsstrukturen abgewandten Ende der Stellschraube derart ausgebildet, dass durch eine Drehbewegung der Stellschraube das Einstellmodul in Axialrichtung linear verschoben wird.

Vorzugsweise dichtet das Sicherungselement in der Sicherungsstellung das Gehäuse durch eine Radialdichtung und/oder Axialdichtung ab. Hierdurch wird ein Schutz vor äußeren Einflüssen in der Sicherungsstellung für den Innenraum des Gehäuses verbessert. So kann insbesondere keine Flüssigkeit in das Innere des Gehäuses eindringen.

Die erfindungsgemäße Einstellvorrichtung kann im Wesentlichen durch folgende Schritte montiert werden. Die Stellschraube kann in Gewindeeingriff mit dem Einstellmodul gebracht werden. Von dem Ende, an dem die Antriebsstrukturen angeordnet sind, kann die Gummidichtung auf die Stellschraube aufgebracht werden, so dass die zweite Stirnfläche am Vorsprung der Stellschraube anliegt. Das Einstellmodul kann in der schienenförmigen Ausbildung des Gehäuses so verfahren werden, dass die erste Stirnfläche der Gummidichtung an der Zwischenwand anliegt und somit die Antriebsstrukturen und die Stellschraubenaxialhaltestrukturen durch die Zwischenwandöffnung im Antriebsbereich des Gehäuses angeordnet sind. Durch die Gehäuseöffnung kann die Baugruppe aus Antriebselement und Sicherungselement in das Gehäuse eingebracht werden, wobei sich das Sicherungselement in der Montageposition befindet. Die Baugruppe kann so weit axial in das Gehäuse eingebracht werden, dass die Antriebsstrukturen der Stellschraube mit der Abtriebsstruktur des Antriebselements in Eingriff steht und die Stellschraubenaxialhaltestruktur und die Antriebselementaxialhaltestruktur einen Formschluss bilden, sodass die Stellschraubenaxialhaltestruktur und die Antriebselementaxialhaltestruktur einem Verfahren entgegen der jeweiligen Einbringrichtung ins Gehäuse entgegenwirken.

Auf diese Weise kann bei niedrigen Montagekräften eine zuverlässige Sicherung der Stellschraubenanordnung erfolgen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1a: eine Teilschnittansicht der erfindungsgemäßen Einstellvorrichtung mit dem Sicherungselement in der Montageposition;
- Fig. 1b: eine Schnittansicht einer Detailansicht der Stellschraubenanordnung nach Fig. 1a;
- Fig. 2a: eine Teilschnittansicht der erfindungsgemäßen Einstellvorrichtung mit dem Sicherungselement in der Sicherungsposition;
- Fig. 2b: eine Schnittansicht einer Detailansicht der Stellschraubenanordnung nach Fig. 2a;
- Fig. 3a: eine perspektivische Ansicht des Antriebselements, und
- Fig. 3b: eine perspektivische Ansicht des Sicherungselements.

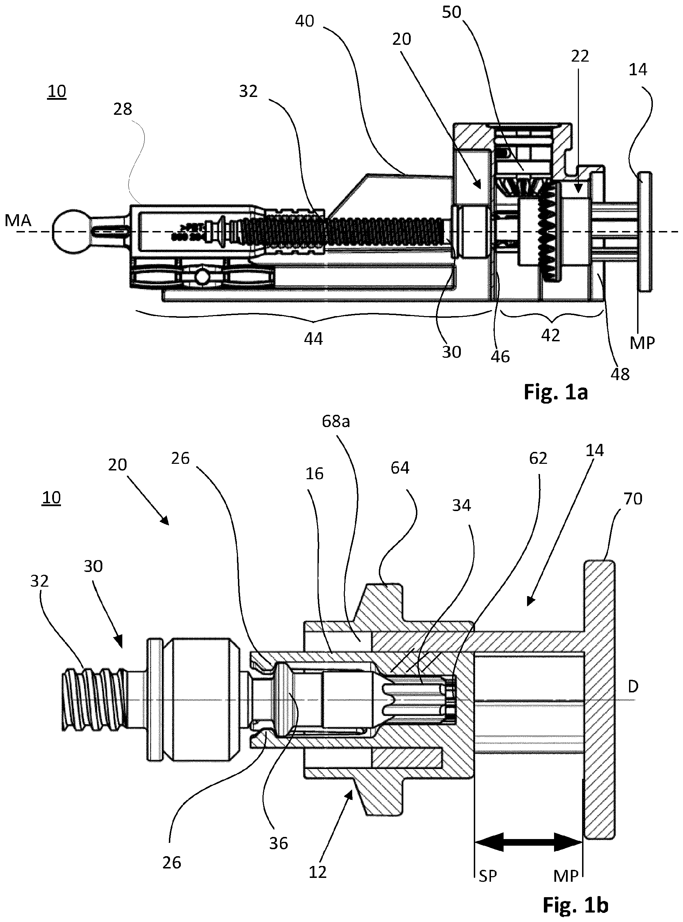

Fig. 1a zeigt eine teilgeschnittene Ansicht einer erfindungsgemäßen Einstellvorrichtung 10.

Die Einstellvorrichtung 10 umfasst ein Gehäuse 40, ein im Gehäuse 40 lineargeführtes Einstellmodul 28 und eine Stellschraubenanordnung 20. Die Stellschraubenanordnung 10 umfasst eine Stellschraube 30, die mit ihrem Schraubengewinde im Gewindeeingriff mit dem Einstellmodul 28 steht.

Die Stellschraube 30, besitzt eine Mittelachse MA. Das Einstellmodul 28 weist dabei ein Innengewinde auf, in das das Schraubengewinde 32 eingreift. Das Einstellmodul 28 ist durch einen linearen Verfahrbereich des Gehäuses 40 im Bereich der Unterseite des Gehäuses 40 in Axialrichtung linear verschiebbar gelagert. Der Gewindeeingriff ist derart ausgebildet, dass durch eine Drehbewegung der Stellschraube 30 das Einstellmodul 28 in Axialrichtung linear verschoben wird.

Ferner umfasst die Stellschraubenanordnung 20 eine Antriebsbaugruppe 22 umfassend ein Antriebselement 12 und Sicherungselement 14, wobei das Antriebselement 12 derart mit der Stellschraube 30 verbunden ist, dass die Drehbewegung des Antriebselements 12 auf die Stellschraube 30 übertragen wird, wodurch das Einstellmodul 28 linear verfahren wird. Die Einstelleinrichtung 10 umfasst ein Kegelrad 50, von dem eine Drehbewegung, die insbesondere mittels eines Schraubwerkzeugs eingebracht wird, auf das Antriebselement 12 übertragen wird.

In der dargestellten Montagestellung befindet sich das relativ zum Antriebselement 12 axial verschiebbar gelagerte Sicherungselement 14 in einer Montageposition MP.

Das Gehäuse 40 ist aus einem Antriebsbereich 42 und einem Verfahrbereich 44 gebildet, die durch eine Zwischenwand 46 getrennt sind. An einer Oberseite des Antriebsbereichs 42 ist das Kegelrad 50 eingebracht.

Der Antriebsbereich 42 weist an seiner der Zwischenwand 46 abgewandten Seite eine, eine Einsetzöffnung 48 bildende, Rückseite auf, durch die die Antriebsbaugruppe 22 eingesetzt werden kann.

Die Zwischenwand 46 weist eine Stellschraubenöffnung auf, in die die Stellschraube 30 eingebracht ist. Die Stellschraube 30 ist dabei so eingebracht, dass der hintere Teil der Stellschraube 30 im Antriebsbereich 42 zu liegen kommt und der vordere gewindetragende Bereich im Verfahrbereich 44.

Nachdem die Stellschraube 30 vom verfahrbereichsseitigen Teil aus, die Zwischenwand 46 durchsetzend, in das Gehäuse 40 eingesetzt wurde, kann die so vormontierte Stellschraube 30 mit der durch die Einsetzöffnung 48 eingebrachte Antriebsbaugruppe 22 verbunden werden.

Fig. 1b zeigt eine Detailschnittansicht der Stellschraubenanordnung 20, im Verbindungsbereich von Antriebsbaugruppe 22 und Stellschraube 30.

Im Bereich des hinteren Endes der Stellschraube 30 weist diese umlaufend eingebrachte Antriebsstrukturen 34 auf. In Richtung des vorderen Endes gesehen, ist nachfolgend zu den Antriebsstrukturen 34 ein in radialer Richtung orientierter, in Umfangsrichtung umlaufender Haltevorsprung 36 ausgebildet.

Die Stellschraube 30 wird sowohl im Bereich des Haltevorsprungs 36 als auch im Bereich der Antriebsstrukturen 34 vom Antriebselement 12 umgriffen.

Die Antriebsstrukturen 34 der Stellschraube werden am hinteren Ende des Antriebselements 12 von Abtriebsstrukturen 62 des Antriebselements 12 umgriffen. Die Antriebsstrukturen 34 der Stellschraube 30 sind in der Art eines Außenantriebs ausgebildet, wobei ein Drehmoment über die Abtriebsstrukturen 62 vom Antriebselement 12 auf die Stellschraube 30 übertragen wird. Das Antriebselement 12 besitzt eine Drehachse D die koaxial zur Schraubenmittelachse M liegt.

Das Drehmoment auf das Antriebselement 12 wird von dem in Fig. 1a gezeigten Kegelrad 50 auf die Antriebsstruktur 64 des Antriebselements 12 übertragen, die in Form einer Kegelradverzahnung ausgebildet ist.

Das Antriebselement 12 ist als einteiliger Grundkörper ausgebildet, so dass die Drehbewegungsübertragung von der Antriebsstruktur 64 auf die Abtriebsstruktur 62 über einen einstückigen Grundkörper erfolgt, und so unmittelbar auf die Stellschraube 30 übertragen werden kann.

In einem ersten Endbereich des Antriebselements 12 sind vier nachgiebige Haltefinger 16 ausgebildet. Die nachgiebigen Haltefinger 16 liegen mit einer nach innen orientierten Formschlussstruktur 26 auf der Innenseite formschlüssig an einer Stirnseite des umlaufenden Haltevorsprungs 36 an.

Durch die Nachgiebigkeit der Haltefinger 16 kann das Antriebselement 12 und damit auch die Antriebsbaugruppe 22 in der Montagestellung auf das hintere Ende der Stellschraube 30 in einer Axialbewegung aufgesteckt werden, so dass nach dem Aufstecken eine Rastverbindung zwischen den Formschlussstrukturen 26 und dem Haltevorsprung 36 entsteht.

Diese Rastverbindung kann aufgrund der Nachgiebigkeit der Haltefinger 16 in der gezeigten Montageposition MP des Sicherungselements 14 in vorteilhafter Weise ohne großen Kraftaufwand hergestellt werden. Dies führt jedoch auch dazu, dass die Rückhaltekraft nicht zufriedenstellend groß ist, um der durch das Kegelrad 50 aufgebrachten Axialkraft zuverlässig entgegenzuwirken.

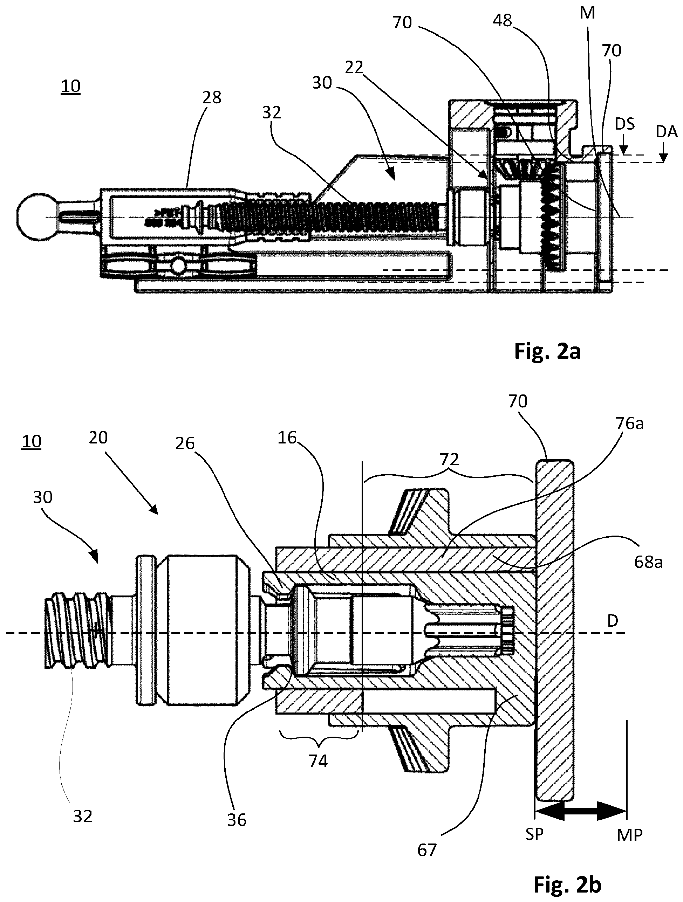

Um die durch das Zusammenwirken der Formschlussstrukturen 26 und dem Haltevorsprung 36 vermittelte Rückhaltekraft zu erhöhen, wird das Sicherungselement 14 in Axialrichtung von der Montageposition MP in die Sicherungsposition SP, wie dies in den Figuren 2a, 2b dargestellt ist, verschoben.

Fig. 2a zeigt die Einstellvorrichtung 10 in einer Sicherungsstellung, in der das Sicherungselement 14 in Axialrichtung relativ zum Antriebselement 12 in Richtung des Schraubengewindes 32 bis zu seiner Sicherungsposition SP verschoben ist.

Das Sicherungselement 14 endet an seinem zweiten Ende, das auf der den Formschlussstrukturen 26 abgewandten Seite des Antriebselements 12 liegt, in einer Abdeckkappe 70. Die Antriebsbaugruppe 22 ist so abgestimmt, dass der Außendurchmesser DS der Abdeckkappe 70 größer als der Außendurchmesser DA des Antriebselements 12 ist.

Die Einsetzöffnung 48 kann daher in ihrem Innendurchmesser so bemessen sein, dass dieser kleiner als der Außendurchmesser DS der Abdeckkappe 70 aber größer als der Außendurchmesser DA des Antriebselements 12 ist. Auf diese Weise kann die Antriebsbaugruppe 22 so in die Einsetzöffnung 48 eingesetzt werden, dass die Abdeckkappe 70 die Einsetzöffnung 48 abdecken kann.

Bevorzugt kann das Gehäuse 40 an der Einsetzöffnung 48 so gestaltet sein, dass sich ein Rand um die Abdeckkappe ergibt, so dass die Abdeckkappe 70 in der Sicherungsposition SP bündig mit dem Gehäuse abschließt. Dadurch kann ein manuelles Entsichern der Verbindung erschwert werden.

Zwischen dem Gehäuse 40 und der Abdeckkappe 70 kann ein Dichtelement angeordnet sein. Das Dichtelement kann als radial und / oder axial wirkendes Dichtelement ausgebildet sein.

An seinem dem Schraubengewinde 32 zugewandten ersten Endbereich durchragt in der Sicherungsposition SP das Sicherungselement 14 das Antriebselement 12 und verhindert in der Sicherungsstellung ein unbeabsichtigtes Lösen der Antriebsbaugruppe 22, was in der Fig. 2b näher erläutert ist.

Fig. 2b zeigt eine Detailschnittansicht der Stellschraubenanordnung 20 in der Sicherungsstellung.

Das Sicherungselement 14 besitzt an seinem ersten Endbereich einen Sicherungsbereich 74 und einen zwischen dem Sicherungsbereich 74 und der Abdeckkappe 70 liegenden Sicherungsbereich 72.

Das Sicherungselement 14 weist in seinem Sicherungsbereich 74 eine hohlzylindrische Form mit gleichbleibendem Durchmesser auf. Der Sicherungsbereich 74 umgreift, wenn sich das Sicherungselement 14 in der Sicherungsposition SP befindet, die Haltefinger 16 des Antriebselements 12 im Bereich der Formschlussstrukturen 26 vollumlaufend. Auf diese Weise wird durch die in Radialrichtung formschlüssige Festlegung der Haltefinger 16 einer radialen Aufweitung des Haltevorsprungs 36 entgegengewirkt und dadurch ein Lösen der Antriebsbaugruppe 22 von der Stellschraube 30 verhindert.

Der Außendurchmesser des Durchgriffsbereichs 72 ist kleiner als der Außendurchmesser DA des Antriebselements 12, so dass das Sicherungselement 14 den Antrieb des Antriebselements 12 nicht behindert.

Im Durchgriffsbereich 72 weist das Sicherungselement 14 stegförmige Wandelemente 76a, 76b, 76c auf, die in zugeordneten Ausnehmungen 68a, 68b, 68c, die zur Ermöglichung einer Linearführung in ihrem Querschnitt auf den Querschnitt der stegförmigen Wandelemente 76a, 76b, 76c abgestimmt sind, linear verschiebbar geführt sind. Durch diese lineare Führung kann das Sicherungselement 14 zwischen einer Montageposition MP in eine Sicherungsposition SP verfahren werden.

Zwischen den Ausnehmungen 68a, 68b, 68c im Antriebselement 12 ergeben sich in Umfangsrichtung folglich Anschläge 67, die mit dem hohlzylindrischen Sicherungsbereich 74 derart zusammenwirken, dass eine Verlustsicherung bei Verschiebung in Richtung der Montageposition MP gegeben ist und auch eine definierte Montageposition MP eingenommen werden kann.

Der Außendurchmesser des Sicherungsbereichs kann auch größer sein als der maximale Außendurchmesser der Ausnehmungen 68a, 68b, 68c, so dass sich ein vollständig umlaufender Anschlagsbereich zwischen dem Antriebselement 12 und dem Sicherungselement 14 ergibt.

Da sich aufgrund der Abdeckkappe 70 des Sicherungselements 14 auch ein formschlüssiger Anschlag in Richtung der Sicherungsposition SP ergibt, ist das Sicherungselement 14 vollständig verlustsicher zum Antriebselement 12 gelagert. Sowohl das Antriebselement 12 als auch das Sicherungselement 14 sind in der vorliegenden Ausführung einstückig ausgebildet.

Bevorzugt werden daher das Antriebselement 12 und das Sicherungselement 14 zusammen in einem Urformverfahren als Antriebsbaugruppe 22 hergestellt, beispielsweise einem Zwei-Komponenten-Spritzgiess-Verfahren.

Durch die erfindungsgemäße Gestaltung der Einstellvorrichtung 10 wirkt die vom Kegelrad 50 aufgebrachte Axialkraft nicht auf das Sicherungselement 14, so dass das Sicherungselement 14 nicht abgestützt werden muss, was eine Reduzierung der Montagekräfte und damit einfachere Montage erlaubt. Durch die verlustsichere Ausgestaltung der Elemente der Antriebsbaugruppe 22 wird die Montage weiter erleichtert.

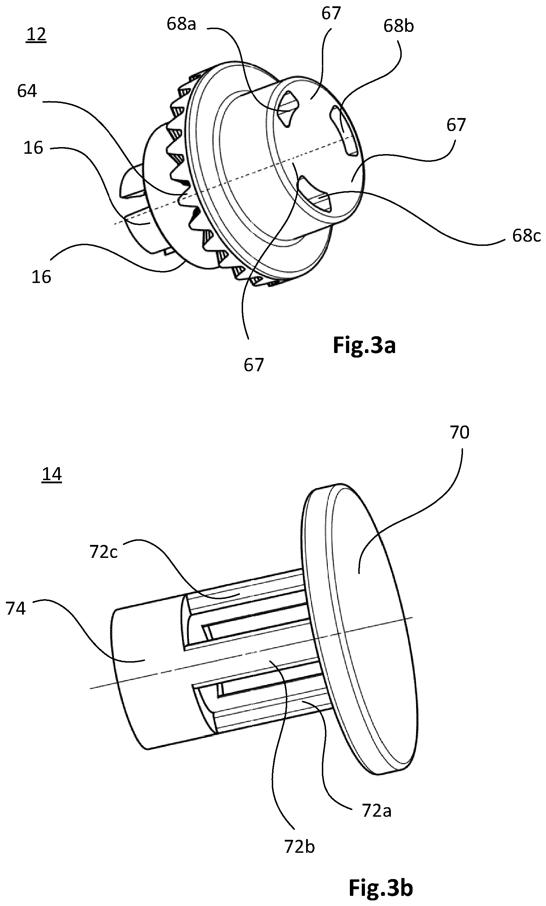

Die Fig. 3a, 3b zeigen eine perspektivische Ansicht der einzelnen Elemente, Antriebselement 12 und Sicherungselement 14, der Antriebsaugruppe 22.

Das Antriebselement 12 weist drei Durchführungen 68a, 68b, 68c auf. Die Ausnehmungen 68a, 68b, 68c sind dabei teilschlitzförmig auf einer Kreisbahn angeordnet, wobei sich zwischen den Ausnehmungen 68a, 68b, 68c jeweils Anschläge 67 ergeben. Am radial äußeren Rand ist das Antriebselement 12 mit einer Antriebsstruktur 64 zum Antrieb des Antriebselements 12 versehen, wobei am ersten Ende die Haltefinger 16 mit den Formschlussstrukturen 26 hervorragen. Das Antriebselement 12 ist einstückig ausgebildet.

Das Antriebselement 12 ist aus einem thermoplastischen Kunststoff ausgebildet.

Fig. 3b zeigt das Sicherungselement 14 in einer perspektivischen Ansicht.

An seinem ersten Ende weist es, wie zuvor beschrieben, einen hohlzylindrischen Sicherungsbereich 74 auf, wobei die stegförmigen Wandelemente 76a, 76b, 76c, im Wesentlichen Wandbereiche einer hohlzylindrischen Wandung sind. Die stegförmigen Wandelemente 76a, 76b, 76c und die Ausnehmungen 68a, 68b, 68c des Antriebselements gemäß Fig. 3a sind zur lineargeführten Lagerung aufeinander abgestimmt.

Das Sicherungselement 14 ist einstückig ausgebildet und insbesondere aus thermoplastischem Kunststoff ausgebildet. Die Schmelztemperatur des thermoplastischen Kunststoffes des Antriebselements 12 ist größer als die Schmelztemperatur des thermoplastischen Kunststoffes des Sicherungselements 14.

## Patentansprüche

1. Einstellvorrichtung (10) für Scheinwerfer, umfassend eine Stellschraubenanordnung (20), umfassend eine Stellschraube (30) mit einer Schraubenmittelachse (M), wobei die Einstellvorrichtung (10) ferner ein Antriebselement (12) aufweist, das einen einstückig ausgebildeten Grundkörper besitzt, wobei der Grundkörper eine Antriebsstruktur (64) und eine Abtriebsstruktur (62) zur Drehbewegungsübertragung aufweist, wobei die Antriebsstruktur (64) und die Abtriebsstruktur (62) eine gemeinsame Drehachse (D) besitzen und die Antriebsstruktur (64) radial außerhalb der Abtriebsstruktur (62) liegt, wobei das Antriebselement (12) die Stellschraube (30) derart umgreift, dass die Abtriebsstruktur (62) mit der Stellschraube (30) in Drehrichtung formschlüssig gekoppelt ist und die Drehachse (D) und die Schraubenmittelachse (M) koaxial zueinander liegen, wobei die Stellschraube (30) eine Stellschraubenaxialhaltestruktur und das Antriebselement (12) eine Antriebselementaxialhaltestruktur aufweisen, wobei die Stellschraubenaxialhaltestruktur und Antriebselementaxialhaltestruktur zumindest in einer Sicherungsstellung derart in Eingriff stehen, dass die Antriebselementaxialhaltestruktur und die Stellschraubenaxialhaltestruktur einer axialen Relativbewegung zwischen der Stellschraube (30) und dem Antriebselement (12) entgegen wirken, ferner umfasst die Stellschraubenanordnung (20) ein Sicherungselement (14), wobei das Sicherungselement (14) zumindest von einer Montageposition (MP) in eine Sicherungsposition (SP) relativ zum Antriebselement (12) axial verschiebbar ist, **dadurch gekennzeichnet, dass** das Sicherungselement (14) einen Sicherungsbereich (74) aufweist, der in der Sicherungsposition (SP) die Antriebselementaxialhaltestruktur wenigstens bereichsweise in radialer Richtung derart formschlüssig umgreift, dass die in der Sicherungsposition (SP) von der Stellschraubenaxialhaltestruktur und der Antriebselementaxialhaltestruktur vermittelte in Axialrichtung wirkende Rückhaltekraft gegenüber der Montageposition (MP) wenigstens in Axialrichtung erhöht ist, und dass das Sicherungselement (14) derart relativ zum Antriebselement (12) angeordnet ist, dass der Sicherungsbereich (74) radial zwischen der Antriebsstruktur (64) und der Abtriebsstruktur (62) liegt.

2. Einstellvorrichtung nach Anspruch 1, **dadurch gekennzeichnet, dass** das Sicherungselement (14) gegenüber dem Antriebselement (12), insbesondere gegenüber dem Grundkörper des Antriebselements (12), linear geführt ist.

3. Einstellvorrichtung nach Anspruch 1 oder 2, **dadurch gekennzeichnet, dass** zur Begrenzung des axialen Verfahrwegs des Sicherungselements (14) zwischen Montageposition (MP) und Sicherungsposition (SP) ein formschlüssiger Anschlag zwischen Antriebselement (12) und Sicherungselement (14) ausgebildet ist.

4. Einstellvorrichtung nach einem der vorangehenden Ansprüche, **dadurch gekennzeichnet, dass** der Grundkörper wenigstens eine Ausnehmung (68a, 68b, 68c) aufweist, wobei das Sicherungselement (14) die wenigstens eine Ausnehmung (68a, 68b, 68c) durchsetzt und in der wenigstens eine Ausnehmung (68a, 68b, 68c) linear geführt wird.

5. Einstellvorrichtung nach einem der vorangehenden Ansprüche, **dadurch gekennzeichnet, dass** die Antriebselementaxialhaltestruktur (16,26) einstückig mit dem Grundkörper ausgebildet ist und / oder die Stellschraubenaxialhaltestruktur (36) einstückig mit der Stellschraube (30) ausgebildet ist.

6. Einstellvorrichtung nach einem der vorangehenden Ansprüche, **dadurch gekennzeichnet, dass** die Antriebselementaxialhaltestruktur (16,26) nachgiebige Haltefinger (16) umfasst und die Stellschraubenaxialhaltestruktur (36) in Axialrichtung formschlüssig umgreift.

7. Einstellvorrichtung nach einem der vorangehenden Ansprüche, **dadurch gekennzeichnet, dass** das Antriebselement (12) die Stellschraube (30) an ihrem Endbereich umgreift und an ihrem Endbereich antreibt.

8. Einstellvorrichtung nach einem der vorangehenden Ansprüche, **dadurch gekennzeichnet, dass** die Axialhaltestrukturen in Axialrichtung zwischen den Abtriebsstrukturen (62) und dem Schraubengewinde (32) der Stellschraube (30) liegen.

9. Einstellvorrichtung nach einem der vorangehenden Ansprüche, **dadurch gekennzeichnet, dass** das Sicherungselement (14) einen hohlzylindrisch gestalteten **Sicherungsbereich (74)** aufweist und in der Sicherungsposition (SP) die Antriebselementaxialhaltestruktur komplett umlaufend umgreift.

10. Einstellvorrichtung nach einem der vorangehenden Ansprüche, **dadurch gekennzeichnet, dass** das Sicherungselement (14) ein am Schraubengewinde (32) der Stellschraube (30) abgewandten Ende des Sicherungselements (14) eine Abdeckkappe (70) aufweist, deren Außendurchmesser (DS) größer als der Außendurchmesser (DA) des Antriebselements (12) ist.

11. Einstellvorrichtung nach einem der vorangehenden Ansprüche, **dadurch gekennzeichnet, dass** das Sicherungselement (14) in der Sicherungsposition (SP) mit dem Antriebselement (12) verrastet ausgebildet ist.

12. Einstellvorrichtung nach einem der vorangehenden Ansprüche, **dadurch gekennzeichnet, dass** das Antriebselement (12) und das Sicherungselement (14) durch ein Zwei-Komponenten-Spritzguss-Verfahren hergestellt sind.

13. Einstellvorrichtung nach einem der vorangehenden Ansprüche, **dadurch gekennzeichnet, dass** die Stellschraube (30) mit dem Antriebselement (12) in der Montagestellung verrastbar in Eingriff bringbar ist.

14. Einstellvorrichtung nach einem der vorangehenden Ansprüche, **dadurch gekennzeichnet, dass** die Einstellvorrichtung (10) ein zur Stellschraube (30) senkrecht orientiertes Kegelrad (50) aufweist, das in die Antriebsstruktur (64) eingreift.

15. Einstellvorrichtung nach einem der vorangehenden Ansprüche, **dadurch gekennzeichnet, dass** das Antriebselement (12) aus einem ersten thermoplastischen Kunststoff und das Sicherungselement (14) aus einem zweiten thermoplastischen Kunststoff ausgebildet sind, wobei die Schmelztemperatur des ersten thermoplastischen Kunststoffs höher ist als die Schmelztemperatur des zweiten thermoplastischen Kunststoffs.

16. Einstellvorrichtung nach einem der vorangehenden Ansprüche, **dadurch gekennzeichnet, dass** zwischen einem Gehäuse (40) der Einstellvorrichtung und der Abdeckkappe (70) der Stellschraubanordnung (20) ein Dichtelement angeordnet ist.

## Claims

1. Adjusting device (10) for headlights comprising an adjusting screw assembly (20) having an adjusting screw (30) with a screw center axis (M), which adjusting device (10) further includes a drive element (12) having an integrally formed base body, which base body has a drive structure (64) and a driven structure (62) for transmitting rotary motion, wherein the drive structure (64) and the driven structure (62) share a common axis of rotation (D) and the drive structure (64) lies radially outside the driven structure (62), wherein the drive element (12) engages around the adjusting screw (30) in such a way that the driven structure (62) is positively coupled to the adjusting screw (30) in the direction of rotation, and the axis of rotation (D) and the screw center axis (M) are coaxial, wherein the adjusting screw (30) has an adjusting screw axial retaining structure and the drive element (12) has a drive element axial retaining structure, wherein the adjusting screw axial retaining structure and the drive element axial retaining structure are in engagement with one another, at least in a locking position, in such a manner that the drive element axial retaining structure and the adjusting screw axial retaining structure will counteract any relative axial movement between the adjusting screw (30) and the drive element (12), the adjusting screw assembly (20) further comprises a locking element (14), which locking element (14) is adapted to be axially displaced relative to the drive element (12) at least from a mounting position (MP) to a locking position (SP) thereof, **characterized in that** the locking element (14) comprises a locking section (74) which, in the locking position (SP), engages around the drive element axial retaining structure, at least in some areas, in a form-fitting manner in a radial direction so as to cause an increase at least in the axial direction of the axial-acting retaining force provided in the locking position (SP) by the adjusting screw axial retaining structure and the drive element axial retaining structure relative to the mounting position (MP), and **in that** the locking element (14) is arranged relative to the drive element (12) such that the locking section (74) lies radially between the drive structure (64) and the output structure (62).

2. Adjusting device according to claim 1, **characterized in that** the locking element (14) is guided linearly relative to the drive element (12), in particular relative to the base body of the drive element (12).

3. Adjusting device according to any one of claims 1 and 2 above, **characterized in that,** in order to limit the axial travel of the locking element (14) between the mounting position (MP) and the locking position (SP), a positively engaging stop is formed between the drive element (12) and the locking element (14).

4. Adjusting device according to any one of the preceding claims, **characterized in that** the base body comprises at least one recess (68a, 68b, 68c), with the locking element (14) extending through the at least one recess (68a, 68b, 68c) and being linearly guided in the at least one recess (68a, 68b, 68c).

5. Adjusting device according to any one of the preceding claims, **characterized in that** the drive element axial retaining structure (16, 26) is formed integrally with the base body, and/or that the adjusting screw axial retaining structure (36) is formed integrally with the adjusting screw (30).

6. Adjusting device according to any one of the preceding claims, **characterized in that** the drive element axial retaining structure (16, 26) comprises flexible retaining fingers (16) and engages around the adjusting screw axial retaining structure (36) in the axial direction in a positive locking manner.

7. Adjusting device according to any one of the preceding claims, **characterized in that** the drive element (12) engages around the end section of adjusting screw (30) and drives it at its end section.

8. Adjusting device according to any one of the preceding claims, **characterized in that** the axial retaining structures are located in the axial direction between the driven structures (62) and the screw thread (32) of the adjusting screw (30).

9. Adjusting device according to any one of the preceding claims, **characterized in that** the locking element (14) has a hollow cylindrical locking region (74), and **in that**, in the locking position (SP), it completely engages around the drive element axial retaining structure.

10. Adjusting device according to any one of the preceding claims, **characterized in that** the locking element (14) comprises a cover cap (70) at the end of the locking element (14) opposite the threaded portion (32) of the adjusting screw (30), with the outer diameter (DS) of the cover cap (70) being greater than the outer diameter (DA) of the drive element (12).

11. Adjusting device according to any one of the preceding claims, **characterized in that** the locking element (14) is designed to engage with the drive element (12) in the locking position (SP).

12. Adjusting device according to any one of the preceding claims, **characterized in that** the drive element (12) and the locking element (14) are manufactured in a two-component injection molding process.

13. Adjusting device according to any one of the preceding claims, **characterized in that,** in the mounting position, the adjusting screw (30) can be engaged with the drive element (12) in such a way that they are locked together.

14. Adjusting device according to any one of the preceding claims, **characterized in that** the adjusting device (10) comprises a bevel gear (50) which is positioned perpendicular to the adjusting screw (30) and which engages with the drive structure (64).

15. Adjusting device according to any one of the preceding claims, **characterized in that** the drive element (12) is formed from a first thermoplastic material, and the locking element (14) is formed from a second thermoplastic material, with the melting temperature of the first thermoplastic material being higher than the melting temperature of the second thermoplastic material.

16. Adjusting device according to any one of the preceding claims, **characterized in that** a sealing element is arranged between a housing (40) of the adjusting device and the cover cap (70) of the adjusting screw assembly (20).

## Revendications

1. Dispositif de réglage (10) pour phare, comprenant un agencement de vis de réglage (20), comprenant une vis de réglage (30) avec un axe central de vis (M), dans lequel le dispositif de réglage (10) présente en outre un élément meneur (12) qui possède un corps de base conçu en une seule pièce, dans lequel le corps de base présente une structure meneuse (64) et une structure menée (62) pour le transfert de mouvement de rotation, dans lequel la structure meneuse (64) et la structure menée (62) possèdent un axe de rotation (D) commun et la structure meneuse (64) se situe radialement à l'extérieur de la structure menée (62), dans lequel l'élément meneur (12) enserre la vis de réglage (30) de sorte que la structure menée (62) soit couplée par coopération de forme avec la vis de réglage (30) dans la direction de rotation et que l'axe de rotation (D) et l'axe central de vis (M) se situent de façon coaxiale l'un par rapport à l'autre, dans lequel la vis de réglage (30) présente une structure de retenue axiale de vis de réglage et l'élément meneur (12) présente une structure de retenue axiale d'élément meneur, dans lequel la structure de retenue axiale de vis de réglage et la structure de retenue axiale d'élément meneur se trouvent en prise au moins dans une position de sécurisation de sorte que la structure de retenue axiale d'élément meneur et la structure de retenue axiale de vis de réglage agissent à l'encontre d'un mouvement relatif axial entre la vis de réglage (30) et l'élément meneur (12), l'agencement de vis de réglage (20) comprend en outre un élément de sécurisation (14), dans lequel l'élément de sécurisation (14) peut être déplacé axialement par rapport à l'élément meneur (12) au moins depuis une position de montage (MP) jusque dans une position de sécurisation (SP), **caractérisé en ce que** l'élément de sécurisation (14) présente une zone de sécurisation (74) qui dans la position de sécurisation (SP) enserre au moins par endroits la structure de retenue axiale d'élément meneur par coopération de forme et dans la direction radiale de sorte que la force de retenue transmise dans la position de sécurisation (SP) depuis la structure de retenue axiale de vis de réglage et la structure de retenue axiale d'élément meneur et agissant dans la direction axiale soit augmentée au moins dans la direction axiale par rapport à la position de montage (MP), et **en ce que** l'élément de sécurisation (14) est agencé par rapport à l'élément meneur (12) de sorte que la zone de sécurisation (74) se situe radialement entre la structure meneuse (64) et la structure menée (62).

2. Dispositif de réglage selon la revendication 1, **caractérisé en ce que** l'élément de sécurisation (14) est guidé de façon linéaire par rapport à l'élément meneur (12), en particulier par rapport au corps de base de l'élément meneur (12).

3. Dispositif de réglage selon la revendication 1 ou 2, **caractérisé en ce qu'**une butée par coopération de forme est conçue entre l'élément meneur (12) et l'élément de sécurisation (14) pour délimiter la course axiale de l'élément de sécurisation (14) entre la position de montage (MP) et la position de sécurisation (SP).

4. Dispositif de réglage selon l'une des revendications précédentes, **caractérisé en ce que** le corps de base présente au moins un évidement (68a, 68b, 68c), dans lequel l'élément de sécurisation (14) traverse le au moins un évidement (68a, 68b, 68c) et est guidé de façon linéaire dans le au moins un évidement (68a, 68b, 68c).

5. Dispositif de réglage selon l'une des revendications précédentes, **caractérisé en ce que** la structure de retenue axiale d'élément meneur (16, 26) est conçue en une seule pièce avec le corps de base et/ou la structure de retenue axiale de vis de réglage (36) est conçue en une seule pièce avec la vis de réglage (30).

6. Dispositif de réglage selon l'une des revendications précédentes, **caractérisé en ce que** la structure de retenue axiale d'élément meneur (16, 26) comprend des doigts de retenue (16) flexibles et enserre par coopération de forme la structure de retenue axiale de vis de réglage (36) dans la direction axiale.

7. Dispositif de réglage selon l'une des revendications précédentes, **caractérisé en ce que** l'élément meneur (12) enserre la vis de réglage (30) au niveau de sa zone d'extrémité et entraîne la vis de réglage au niveau de sa zone d'extrémité.

8. Dispositif de réglage selon l'une des revendications précédentes, **caractérisé en ce que** les structures de retenue axiale se situent dans la direction axiale entre les structures menées (62) et le filetage de vis (32) de la vis de réglage (30).

9. Dispositif de réglage selon l'une des revendications précédentes, **caractérisé en ce que** l'élément de sécurisation (14) présente une zone de sécurisation (74) réalisée de façon cylindrique creuse et enserre complètement de manière périphérique la structure de retenue axiale d'élément meneur dans la position de sécurisation (SP).

10. Dispositif de réglage selon l'une des revendications précédentes, **caractérisé en ce que** l'élément de sécurisation (14) présente, au niveau de l'extrémité de l'élément de sécurisation (14) opposé au filetage de vis (32) de la vis de réglage (30), un capuchon de recouvrement (70) dont le diamètre extérieur (DS) est supérieur au diamètre extérieur (DA) de l'élément meneur (12).

11. Dispositif de réglage selon l'une des revendications précédentes, **caractérisé en ce que** dans la position de sécurisation (SP) l'élément de sécurisation (14) est conçu de façon encliquetée avec l'élément meneur (12).

12. Dispositif de réglage selon l'une des revendications précédentes, **caractérisé en ce que** l'élément meneur (12) et l'élément de sécurisation (14) sont fabriqués par un procédé de moulage par injection à deux composantes.

13. Dispositif de réglage selon l'une des revendications précédentes, **caractérisé en ce que** la vis de réglage (30) peut être amenée en prise de façon à être encliquetée avec l'élément meneur (12) dans la position de montage.

14. Dispositif de réglage selon l'une des revendications précédentes, **caractérisé en ce que** le dispositif de réglage (10) présente une roue conique (50) orientée perpendiculairement à la vis de réglage (30), laquelle roue conique vient en prise jusque dans la structure meneuse (64).

15. Dispositif de réglage selon l'une des revendications précédentes, **caractérisé en ce que** l'élément meneur (12) est conçu à partir d'une première matière plastique thermoplastique et que l'élément de sécurisation (14) est conçu à partir d'une seconde matière plastique thermoplastique, dans lequel la température de fusion de la première matière plastique thermoplastique est supérieure à la température de fusion de la seconde matière plastique thermoplastique.

16. Dispositif de réglage selon l'une des revendications précédentes, **caractérisé en ce qu'**un élément d'étanchéité est agencé entre un logement (40) du dispositif de réglage et le capuchon de recouvrement (70) de l'agencement de vis de réglage (20).
